# EUROPEAN PATENT APPLICATION

(11) **EP 0 728 569 A1**
(43) Date of publication of application: **28.08.1996**
(21) Application number: 96830074.9
(22) Date of filing: 21.02.1996
(51) Int. Cl.: B29C 47/08

(54) **Gear reduction unit for counter-rotating or co-rotating twin-screw extruders**

(30) Priority: 23.02.1995 IT MI950110 U
(71) Applicant: Zambello Riduttori S.r.l., 21053 Castellanza, Varese (IT)
(72) Inventor: Zambello, Zevio, 21053 Castellanza (Varese) (IT)
(74) Representative: Cicogna, Franco

(57) **Abstract**

The present invention relates to a gear reduction unit for counter-rotating or co-rotating twin-screw extruders which comprises, inside a casing, an input shaft (2), coupled to a chain of reduction gears associated with a first and second output shaft (3,4).

The main feature of the invention is that the gear reduction unit further comprises, on said first and second output shafts (3,4), thrust bearings (30,31), which are offset from one another along the axial extension of the respective shafts.

## Description

### BACKGROUND OF THE INVENTION

The present invention relates to a gear reduction unit for counter-rotating or co-rotating screw extruders.

As is known, the gear reduction units for twin screw extruders are provided with a pair of output shafts, which are arranged adjoining one another, and which are connected to the extruder screws, which can either co-rotate or counter-rotate.

In these applications, very great axial efforts are generated, affecting the output shafts so as to damage the supporting bearings of said shafts.

Thus, the shafts can not be designed with great sizes, because of their adjoining relationship.

### SUMMARY OF THE INVENTION

Accordingly, the aim of the present invention is to overcome the above mentioned drawback, by providing a gear reduction unit for twin screw extruders which allows to use, for the two output shafts, thrust bearings adapted to support the axial effort or stress, while providing the output shafts in an adjoining relationship.

Within the scope of the above mentioned aim, a main object of the present invention is to provide such a gear reduction unit affording the possibility of specifically designing the size of the bearings depending on the actual application requirements.

Another object of the present invention is to provide such a reduction unit which, owing to its making features, is very reliable and safe in operation.

Yet another object of the present invention is to provide such a gear reduction unit which can be easily made starting from easily available elements and materials and which, moreover, is very competitive from a mere standpoint.

According to one aspect of the present invention, the above mentioned aim and objects, as well as yet other objects, which will become more apparent hereinafter, are achieved by a gear reduction unit for counter-rotating or co-rotating twin-screw extruders, which comprises, inside a casing, an inlet shaft, coupled to a chain of reduction gears, associated with a first and second output shafts, characterized in that said reduction unit further comprises, on the first and second output shafts, thrust bearings which are offset from one another along the axial extension of said respective shafts.

### BRIEF DESCRIPTION OF THE DRAWINGS

Further characteristics and advantages of the present invention will become more apparent hereinafter from the following detailed disclosure of a gear reduction unit for counter-rotating or co-rotating twin-screw extruders, which is shown by way of an indicative, but not limitative, example, in the accompanying drawings, where:
Figure 1 schematically illustrates the chain of gears of a gear reduction unit for twin-screw extruders;
Figure 2 is a further schematic view illustrating a reduction unit for counter-rotating twin-screw extruders;

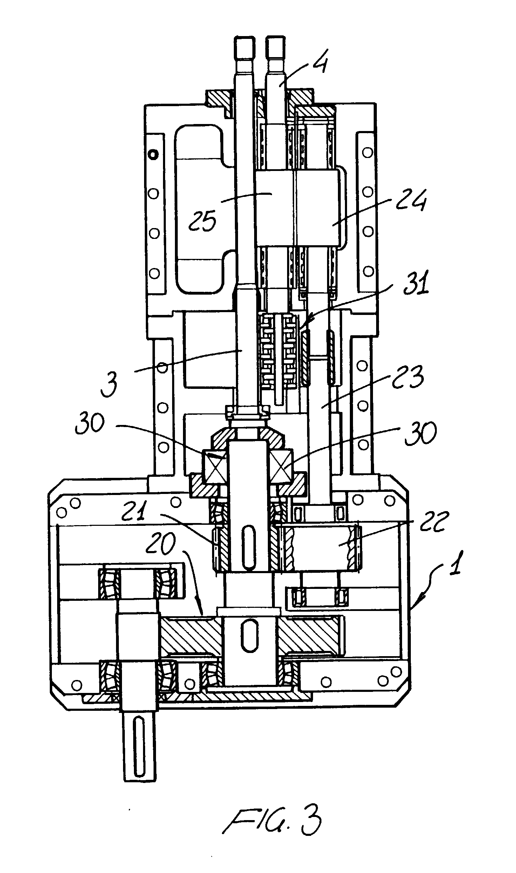

Figure 3 is a further schematic view illustrating a gear reduction unit for co-rotating twin-screw extruders.

### DESCRIPTION OF THE PREFERRED EMBODIMENT

With reference to the number references of the above mentioned figures, the gear reduction unit for counter-rotating and co-rotating twin-screw extruders according to the present invention comprises a casing, indicated by the reference number 1, inside which is provided an inlet shaft 2 which is associated, through a chain or series of gears which will be disclosed in a more detailed manner hereinafter, with a first output shaft 3 and a second output shaft 4.

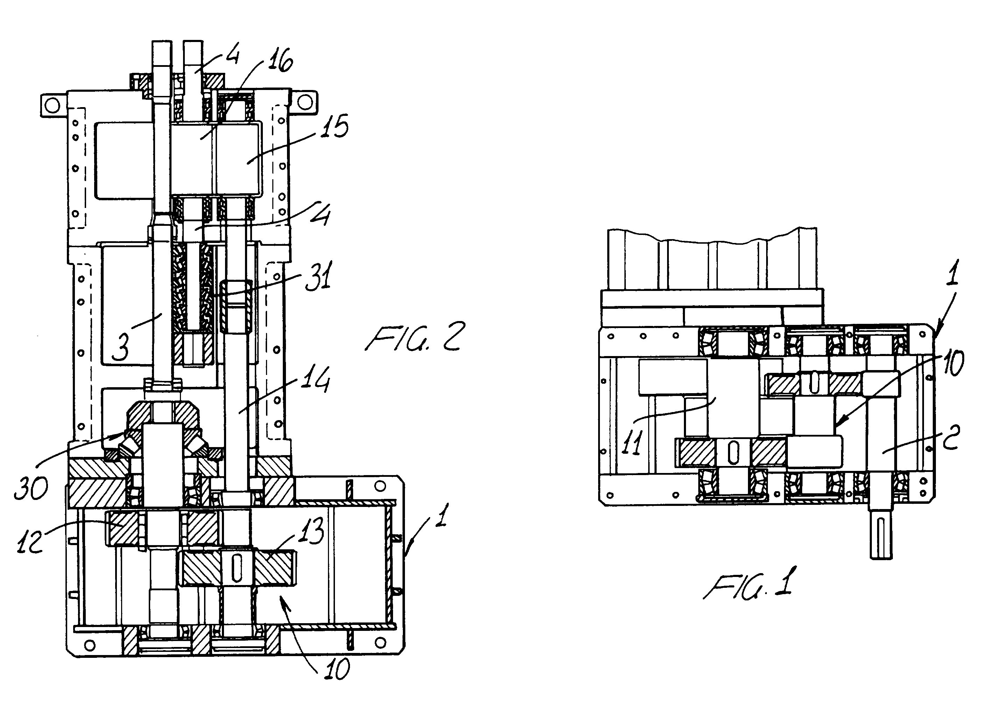

More specifically, and with reference to figures 1 and 2, the co-rotating screw extruder reduction unit comprises a series of gears, generally indicated by the reference number 10, which drives a pinion 11, meshing with a first gear wheel 12 keyed on the first output shaft 3 and a second gear wheel 13, which is keyed on a splitting shaft 14 provided, at the other end portion thereof, with a first reversing pinion 15 meshing with a second reversing pinion 16, keyed on the output shaft 4.

In the case of co-rotating twin-screw extruder reduction units, is provided a gear chain or series of gears, indicated by the reference number 20, for turning the first output shaft, also indicated by the reference number 3, on which is provided a first splitting pinion 21, meshing with a second splitting pinion 22, keyed on the shaft 23 through a splitting gear wheel, on which is in turn keyed a first reversing gear 24.

The latter is coupled to a second reversing gear 25 which is keyed on the second output shaft, indicated by the reference number 4.

In the two above shown embodiments, is provided a first thrust bearing, indicated by the reference number 30, which is arranged at the first output shaft 3 and substantially in the coupling region to the casing 1.

The first thrust bearing 30, since is not arranged adjoining the second shaft 4, can have a comparatively great size and, consequently, it can fit very high urging forces.

On the second output shaft 4, at an axially offset position with respect to the region where the bearing 39 is arranged, is provided a second thrust bearing 31 which axially extends along the shaft 4 and, accordingly, can support very high pushing forces, while having a comparatively small size.

The axial length of the bearing 31 can be adjusted depending on the contingent requirements, so as to provide a thrust bearing precisely corresponding to the required strength characteristics.

From the above disclosure it should be apparent that the invention fully achieves the intended aim and objects.

In particular, the fact is to be pointed out that the above disclosed embodiment, providing for offsetting the thrust bearings of the two output shafts, will allow to design bearings effective to resist against very high efforts, while solving the problem of the large size associated with the gear reduction units to be used in counter-rotating and co-rotating twin-screw extruders.

In practicing the invention, the used materials, provided that they are compatible to the intended use, as well as the contingent size and shapes, can be any depending on requirements.

## Claims

1. A gear reduction unit for counter-rotating or co-rotating twin-screw extruders, which comprises, inside a casing, an inlet shaft, coupled to a chain of reduction gears, associated with a first and second output shafts, characterized in that said reduction unit further comprises, on the first and second output shafts, thrust bearings which are offset from one another along the axial extension of said respective shafts.

2. A gear reduction unit, according to the preceding claim, characterized in that said unit comprises a splitting shaft, driven by the gear chain of the casing and which is operatively connected, through a gear connection, with the second output shaft.

3. A gear reduction unit, according to claims 1 and 2, characterized in that, in the case of a counter-rotating screw extruder, the splitting shaft is driven by the same connection pinion of the first output shaft while, in the case of co-rotating screw extruders, said splitting shaft is directly driven by the output shaft.

4. A gear reduction unit, according to one or more of the preceding claims, characterized in that said thrust bearings, coupled to the first output shaft, are arranged at the casing connection region, whereas the thrust bearings connected to said second output shaft axially extends along the output shaft.

5. A gear reduction unit, according to one or more of the preceding claims, characterized in that the thrust bearing provided on the second output shaft has an adjustable axial extension.
